# EUROPEAN PATENT APPLICATION

(11) **EP 1 659 583 A2**
(43) Date of publication of application: **24.05.2006**
(21) Application number: 05024912.7
(22) Date of filing: 15.11.2005
(51) Int. Cl.: G11B 19/04

(54) **Device for operating a hard disk drive of a mobile communication terminal during impact and a method thereof**

(30) Priority: 19.11.2004 KR 2004095097
(71) Applicant: Samsung Electronics Co., Ltd., Suwon-si, Gyeonggi-Do (KR)
(72) Inventor: Lee, Ha-Ki Samsung Electronics Co., Ltd., Suwon-si Gyeonggi-do (KR); Kim, Hark-Sang Samsung Electronics Co., Ltd., Suwon-si Gyeonggi-do (KR); Park, Seok-Hyo Samsung Electronics Co., Ltd., Suwon-si Gyeonggi-do (KR)
(74) Representative: Lang, Johannes

(57) **Abstract**

A device and method are provided for preventing the damage of a disk by stopping the operation of a hard disk drive (HDD) if vibration is exerted on a hard-disk mobile communication terminal or free falling thereof occurs. The hard-disk mobile communication terminal stops the operation of a HDD by detecting the vibration and/or impact being exerted thereon through a sensor, if the exerted vibration and/or impact exceed a predetermined level. The hard-disk mobile communication terminal includes an impact detecting unit for outputting a HDD operation enable/disable signal that is the basis of decision of whether to operate the HDD according to the level of the impact exerted on the hard-disk mobile communication terminal, and a HDD operation control unit for deciding whether to operate the HDD according to the HDD operation enable/disable signal if access of the HDD is requested.

## Description

### BACKGROUND OF THE INVENTION

### Field of the Invention:

The present invention relates to a device and method for preventing damage to a disk by stopping the operation of a hard disk drive (HDD) if vibration is exerted on a hard-disk mobile communication terminal or free falling thereof occurs. More particularly, the present invention relates to a device and method for stopping the operation of an HDD by detecting vibration and/or impact being exerted on a hard-disk mobile communication terminal through a sensor if the exerted vibration and/or impact exceed a predetermined level.

### Description of the Related Art:

Generally, a mobile communication terminal represents a device that wirelessly communicates with a base station, and primarily performs phone calls. In the present state, however, additional functions for processing multimedia information have gradually added to the mobile communication terminal in addition to the phone call function. For example, a camera may be attached to the mobile communication terminal to process image data, and additional functions such as music files, electronic pocket books, and so on, may be performed in the mobile communication terminal. In order to process the multimedia functions as described above, in other words, in order to store media data such as music and image data such as moving image and still image data, the mobile communication terminal requires a large memory capacity.

To achieve this , a mobile communication terminal is provided with an auxiliary memory built in the terminal or provided outside the terminal. A semiconductor memory or a disk memory may be used as the auxiliary memory. The semiconductor memory may be a nonvolatile memory such as a flash memory, and the disk memory may be a HDD, an Optical Disk Drive (ODD), and so on. The ODD may comprise a Write Once Read Many (WORM)-type Compact Disc-Read Only Memory (CD-ROM), digital video disc (DVD), and so on.

Meanwhile, in the case of the mobile communication terminal having the HDD as the auxiliary memory (hereinafter referred to as a hard-disk mobile communication terminal), the terminal performs a data access process as needed in order to write/read the data into/out of the HDD.

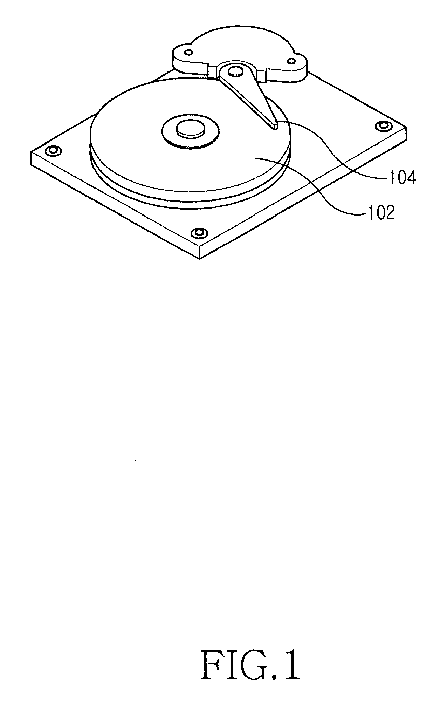

FIG. 1 is a perspective view illustrating the external appearance of a HDD built into a mobile communication terminal.

The HDD is a type of auxiliary storage device that writes/reads data by rotating a circular aluminum substrate 102 on which a magnetic substance is coated. The disk 102 is in the form of circular record plates lying in piles, and concentric circles which are called tracks are drawn on the disk 102. An electronic recording of data is made on these concentric circles. A head 104 serves to write/read information on/out of the tracks. According to the characteristic of the hard-disk mobile communication terminal having a built-in disk drive, however, a user should usually carry the terminal with him/her. If the user carelessly drops the terminal while he/she is carrying the terminal, a specified amount of impact is exerted on the terminal.

If the disk 102 continuously rotates and the head 104 still attempts to access the track while the impact is exerted on the terminal, the head may move to another unwanted track due to the impact and erroneously retrieve data of the unwanted track. Additionally, if the head 104 scratches the track on the disk 102 due to the impact during its operation, this may cause a specified sector in tracks to become a physically bad sector. If such a bad sector occurring due to the impact is left out of repair, an adjacent sector may also become a bad sector due to the fragments of a damaged platter. Accordingly, a countermeasure against the impact being exerted on the hard-disk mobile communication terminal in operation is required.

### SUMMARY OF THE INVENTION

Accordingly, the present invention has been designed to solve the above and other problems occurring in the prior art, and to protect a hard disk drive (HDD) of a hard-disk mobile communication terminal by stopping the operation of the HDD at the moment an impact over a predetermined level is exerted on the mobile communication terminal. Additionally, the present invention can efficiently cope with data access errors which may occur when the impact is exerted on the terminal.

In order to accomplish the above and other objects, a hard-disk mobile communication terminal having a built-in hard disk drive (HDD) is provided according to an exemplary embodiment of the present invention. The hard-disk mobile communication terminal comprises an impact detecting unit for outputting a HDD operation enable/disable signal that is the basis of the decision of whether to operate the HDD according to the level of an impact exerted on the hard-disk mobile communication terminal, and a HDD operation control unit for deciding whether to operate the HDD according to the HDD operation enable/disable signal if access of the HDD is requested.

According to an exemplary implementation of the present invention, the impact detecting unit comprises an impact sensor for measuring and outputting the present amount of impact exerted on the hard-disk mobile communication terminal, a state signal generation module for outputting an impact detect signal which indicates that the impact is detected if the measured amount of impact is over a predetermined threshold value, and outputting a normal signal which indicates that the present state is a normal state that no impact is detected if the measured amount of impact is below the predetermined threshold value, and a HDD operation enable/disable signal generation module for outputting a HDD operation disable signal for stopping the operation of the HDD in an impact detect signal period and outputting a HDD operation enable signal for normal operation of the HDD in a normal signal period.

### BRIEF DESCRIPTION OF THE DRAWINGS

The above and other objects, features and advantages of the present invention will be more apparent from the following detailed description taken in conjunction with the accompanying drawings, in which:
FIG. 1 is a perspective view illustrating an external appearance of a hard disk drive (HDD) built in a mobile communication terminal;
FIG. 2 is a block diagram illustrating a construction of a hard-disk mobile communication terminal according to an exemplary embodiment of the present invention;
FIG. 3 is a block diagram illustrating the internal construction of a multimedia processing unit according to an exemplary embodiment of the present invention;
FIG. 4 is a timing diagram illustrating state signals output from a state signal generation module according to an exemplary embodiment of the present invention;
FIG. 5 is a timing diagram illustrating clock signals output from respective function blocks according to an exemplary embodiment of the present invention; and
FIG. 6 is a flowchart illustrating a process of stopping the operation of an HDD when an impact is exerted on the terminal according to an exemplary embodiment of the present invention.

Throughout the drawings, like reference numerals will be understood to refer to like parts, components and structures.

### DETAILED DESCRIPTION OF EXEMPLARY EMBODIMENTS

Exemplary embodiments of the present invention will be described in detail hereinafter with reference to the accompanying drawings. A detailed description of known functions and configurations incorporated herein will be omitted for clarity and conciseness. Additionally, a number of specific features such as detailed constituent elements are given below in consideration of their functions in the present invention, and they may differ according to the intention of a user, operator, or custom. Accordingly, they should be defined based on the contents of the whole specification of the present invention.

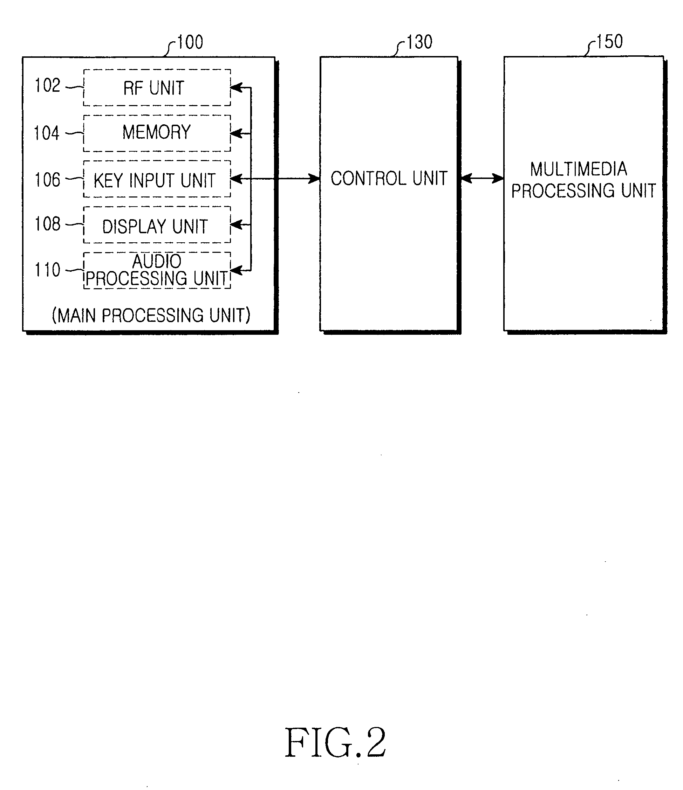

FIG. 2 is a block diagram illustrating the construction of a hard-disk mobile communication terminal according to an exemplary embodiment of the present invention.

Referring to FIG. 2, the hard-disk mobile communication terminal according to an exemplary embodiment of the present invention comprises a main processing unit 100, a multimedia processing unit 150 and a control unit 130. The main processing unit 100 performs a call destination/origination and a call processing function so as to place a phone call that is the original function of the hard-disk mobile communication terminal, and the multimedia processing unit 150 processes media data stored in the hard disk drive (HDD) provided in the hard-disk mobile communication terminal and wireless media data received through a radio frequency (RF) unit 102.

The main processing unit 100 comprises a RF unit 102, a memory 104, a key input unit 106, a display unit 108, and an audio processing unit 110. The RF unit 102 performs a wireless data communication of the hard-disk mobile communication terminal, and the memory stores an operating system (OS) and operation programs, manager data and user data. The key input unit 106 provides a keypad for an interface with a user, and the display unit 108 provides a display means such as a Liquid Crystal Display (LCD), and so on, that displays image data. The audio processing unit 110 comprises a function unit that processes related audio data. The main processing unit performs wireless call destination/origination that is the original function of the terminal through the respective function units. Since operations of the respective function units are well known in the art and thus the detailed explanation thereof will be omitted for clarity and conciseness.

Meanwhile, the multimedia processing unit 150 retrieves and processes the media data stored in the auxiliary HDD. For example, if a specified MP3 music file reproduction request is input from the user, the multimedia processing unit retrieves and reproduces the corresponding MP3 music file stored in the HDD. Additionally, if a specified Moving Picture Experts Group (MPEG) moving image file reproduction request is input from the user, the multimedia processing unit retrieves and reproduces the corresponding MPEG moving image file stored in the HDD. For this, the multimedia processing unit 150 is provided with the HDD, an HDD operation control unit, etc.

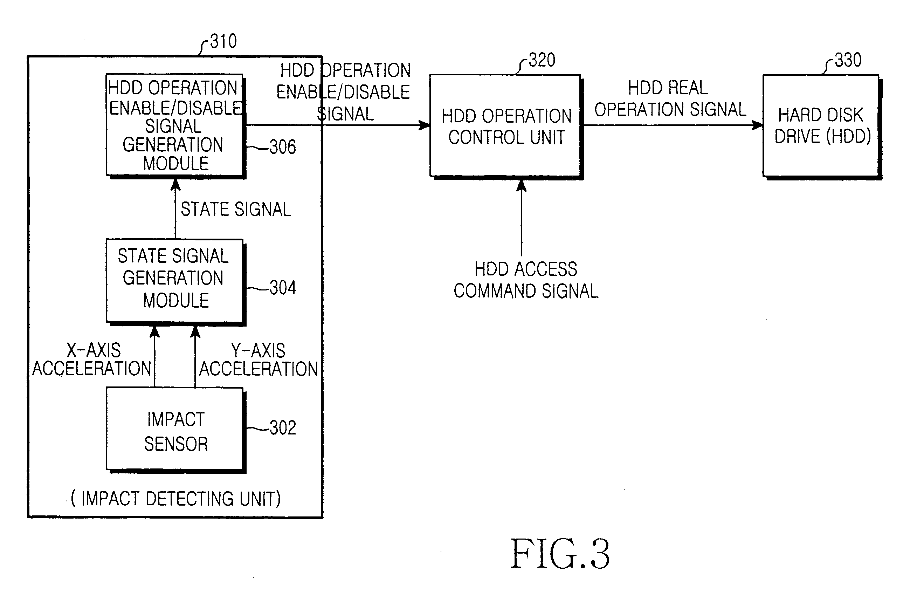

FIG. 3 is a block diagram illustrating the construction of essential function blocks that should necessarily be provided in the multimedia processing unit 150 to control the HDD according to an exemplary embodiment of the present invention.

An impact detecting unit 310 is a function block that detects an impact that is exerted on the mobile communication terminal. The impact detecting unit 310 is provided with an impact sensor 302, a state signal generation module 304 and a HDD operation enable/disable signal generation module 306, and transmits a HDD operation enable/disable signal to a HDD operation control unit 320.

The impact sensor 302 may be implemented by using diverse sensors such as a vibration sensor, an acceleration sensor, an inclination sensor, and so on. In the case in which the impact sensor 302 is implemented by the vibration sensor, the impact sensor 302 detects the impact in a manner that current flows through a switch that is sensitive to the vibration, and if the vibration over a predetermined level is exerted on the switch, contacts of the switch are separated from each other to detect the exerted vibration. In the case in which the impact sensor 302 is implemented by the acceleration sensor, the impact sensor 302 detects the impact by measuring the X-axis acceleration and Y-axis acceleration, respectively. In the case in which the impact sensor 302 is implemented by the inclination sensor, the impact sensor 302 detects the impact by detecting the abrupt change of the X-axis inclination and Y-axis inclination, respectively. In an exemplary embodiment of the present invention, it is exemplified that the impact sensor 302 is implemented by the acceleration sensor. However, it will be apparent that the impact sensor may be implemented by using diverse sensors such as the vibration sensor, inclination sensor, and so on, in addition to the acceleration sensor.

In an exemplary embodiment of the present invention, the acceleration sensor detects the dynamic force such as acceleration, vibration, impact, and so on, by using the applied principles of inertia, electric deformation and gyro. The acceleration sensor can instantaneously detect movement of the mobile communication terminal. The acceleration sensor may be classified into a piezoelectric type sensor that obtains the acceleration by detecting a charge when force is applied to a piezoelectric element, an electrodynamic type sensor that obtains the acceleration by detecting an electromotive force generated in proportion to the speed of a conductor moving in a magnetic field, a servo type sensor that obtains the acceleration by detecting the change of a pendulum (in other words, capacitance) as current, and a strain gauge type sensor that obtains the acceleration by detecting the change of force applied to a diaphragm (in other words, spring) and the change of resistance of a resistance-line strain gauge attached to the diaphragm. In an exemplary embodiment of the present invention, the impact sensor may be implemented by one of the acceleration sensors of the diverse types as described above.

The unit of acceleration measured by the acceleration sensor comprises Grms. Grms represents a unit obtained by combining an acceleration of gravity unit G and a root mean square thereof. This unit indicates the acceleration that varies with time on the average, and expresses the vibration by the probability distribution in the case in which the vibration phenomenon cannot be predicted. For example, a general acceleration unit comprises Velocity/Time (V/T), and the average of the acceleration values caused by the up-and-down vibration occurring in a moving vehicle becomes 0 [V/T]. However, although the average of the acceleration values in the unit of Grms is 0 [V/T], the standard deviation value of the acceleration caused by the vibration is indicated as the average of acceleration. The acceleration sensor transmits the X-axis acceleration value and Y-axis acceleration value in the unit of Grms to the state signal generation module.

The state signal generation module 304 generates a state signal that indicates whether or not the detected impact value received from the impact sensor 302 exceeds the threshold value, and transmits the state signal to the HDD operation enable/disable signal generation module 306. The threshold value corresponds to an impact value in that the HDD can perform a normal operation. If the detected impact value exceeds the threshold value, the HDD may malfunction or a bad sector may occur due to the impact. Each HDD has its own impact value in that it can perform a normal operation, and this impact value is set as the threshold value of the HDD.

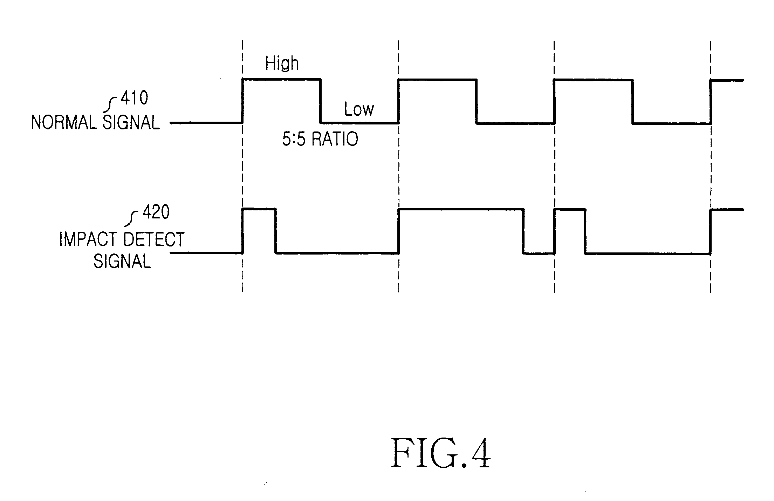

Meanwhile, as illustrated in FIG. 4, the state signal may be classified into a normal signal 410 and an impact detect signal 420. The normal signal 410 represents a signal which indicates that the impact value is below the threshold value and thus the HDD can normally operate, and the impact detect signal 420 represents a signal which indicates that the impact over the threshold value is exerted on the mobile communication terminal.

For example, in the case in which the impact sensor 302 is implemented by an acceleration sensor, the state signal generation module 304 transmits a normal signal to the HDD operation enable/disable signal generation module 306 if the acceleration value received from the acceleration sensor is below the threshold value, while it transmits the impact detect signal to the module 306 if the acceleration value received from the acceleration sensor is over the threshold value. Under the assumption that the threshold value is 3Grms, if the acceleration received from the impact sensor 302 that is implemented by the acceleration sensor is below 3Grms, the state signal generation module generates the normal signal 410, which is in the form of a square wave that alternates between low and high-level states in the ratio of 5:5 for one period, to the HDD operation enable/disable signal generation module 306 as illustrated in FIG. 4. In contrast, if either of the received X-axis acceleration and Y-axis acceleration is over 4Grms, the state signal generation module generates the impact detect signal 420 as illustrated in FIG. 4 and transmits the impact detect signal to the HDD operation enable/disable signal generation module 306. The impact detect signal 420 as illustrated in FIG. 4 is not a clock signal that alternates between low and high-level states in the ratio of 5:5 for one period as the normal signal, but is a square wave in which periods of the low-level state and the high-level state are not in the ratio of 5:5.

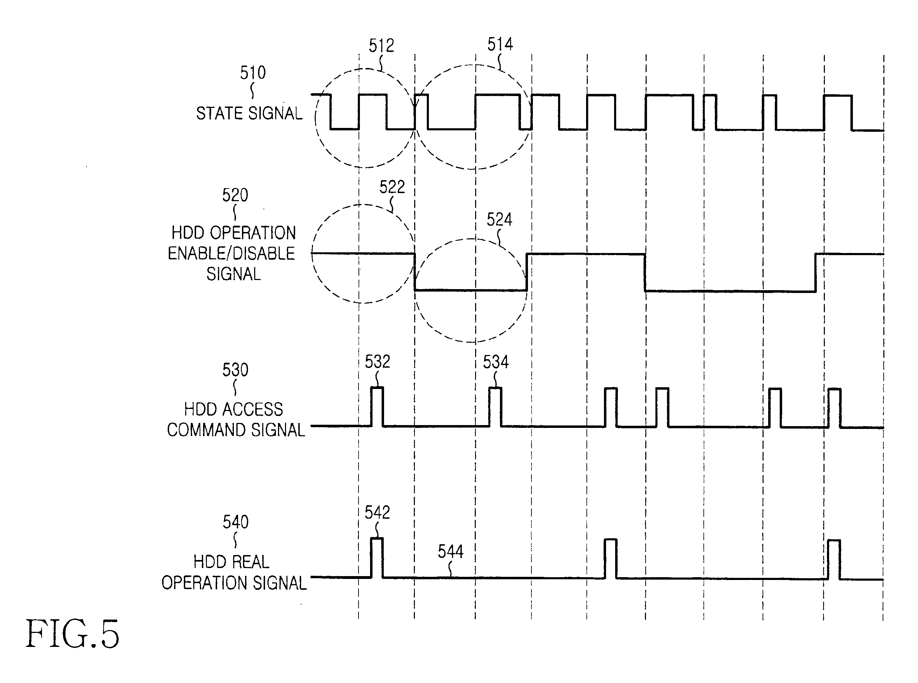

The HDD operation enable/disable signal generation module 306 represents a function block which generates and transfers a HDD operation enable/disable signal 520 that is the basis of the decision of whether to operate the HDD to the HDD operation control unit 320. The HDD operation enable/disable signal 520 is generated by the following method. As illustrated in FIG. 5, if the state signal 510 received from the state signal generation module 304 is the normal signal 512 that is a square wave in which the periods of the low-level state and the high-level state are in the ratio of 5:5, the HDD operation enable/disable signal of a high-level state 522 is generated. Meanwhile, if the state signal 510 is the impact detect signal 514 in which the periods of the low-level state and the high-level state are not in the ratio of 5:5, the HDD operation enable/disable signal of a low-level state 524 is generated.

The generated HDD operation enable/disable signal 520 is transferred to the HDD operation control unit 320, and the HDD operation control unit 320 generates a HDD real operation signal 540 for actually operating the HDD on the basis of the received HDD operation enable/disable signal 520. The HDD operation control unit 320 is a function unit that performs an on/off-control of the HDD, and momentarily stops the operation of the HDD at the moment the impact is exerted on the HDD. For this, the HDD operation control unit 320 generates the HDD real operation signal 540 by AND-gating a HDD access command signal 530 that indicates a HDD access request command received from the control unit and the HDD operation enable/disable signal 520 received from the HDD operation enable/disable signal generation module 306.

Specifically, as illustrated in FIG. 5, if the HDD access request is input from the control unit at a specified moment in order to read/write data from/in the HDD, in other words, if the HDD access command signal 530 received from the control unit is in a high-level state which indicates that access of the HDD is requested, the HDD operation control unit generates the HDD real operation signal 540 by AND-gating the HDD operation enable/disable signal 520 and the HDD access command signal 530 at that time. For example, as illustrated in FIG. 5, since the HDD operation enable/disable signal 520 is in a high-level state 522 that indicates the normal state of the HDD at the first clock 532 of the HDD access command signal, the HDD operation control unit generates the HDD real operation signal 540 of a high-level state 542 by AND-gating the two signals at the specified moment.

In contrast, since the HDD operation enable/disable signal 520 is in a low-level state 524 that indicates the occurrence of an impact over 3Grms at the second clock 534 of the HDD access command signal, the HDD operation control unit generates the HDD real operation signal 540 of a low-level state 544 by AND-gating the two signals at the specified moment.

Consequently, the HDD real operation signal 540 generated as above can be transmitted to the HDD to operate the HDD only in the normal state in which no impact occurs.

Meanwhile, the respective functions explained with reference to the block diagram of FIG. 3 have been described as an example in order to explain the technical idea of the present invention in that the HDD would be operated only when no impact is exerted on the mobile communication terminal. It will be apparent to those skilled in the art that the subject of the present invention can be implemented by not only the function blocks as described above but also other diverse methods.

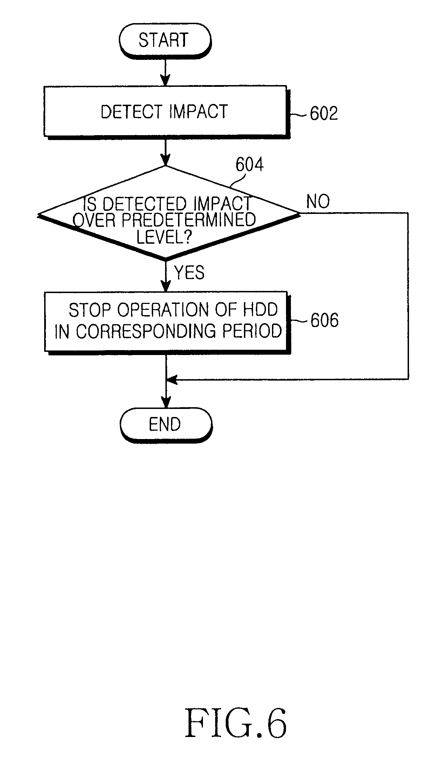

An exemplary embodiment of the present invention will briefly be explained with reference to the flowchart of FIG. 6, which illustrates the process of operating the HDD only in a normal state in which no impact is exerted on the terminal according to the exemplary embodiment of the present invention.

If an impact is detected by an impact sensor such as an acceleration sensor, inclination sensor, vibration sensor and so on at step S602, the mobile communication terminal determines whether the exerted impact is over a predetermined impact level at step S604. If an impact over the predetermined impact level, in other words, over a threshold value (for example, over 3Grms), is detected as a result of determination, the HDD is not operated even if a HDD access request is input from the control unit at step S606. In contrast, if it is determined that the impact strength is below the threshold value and the terminal is in a normal state, the HDD access request from the control unit is approved and the HDD is operated.

As described above, according to an exemplary embodiment of the present invention, an impact sensor is provided in the hard-disk mobile communication terminal, and if an impact over a specified threshold value is detected, the operation of the HDD is stopped to protect the disk. Additionally, through the protection of the disk, the reliability of a product can be heightened.

While the present invention has been shown and described with reference to certain exemplary embodiments thereof such as a mobile communication terminal, it will be understood by those skilled in the art that various changes in form and details may be made therein without departing from the spirit and scope of the present invention as defined by the appended claims.

## Claims

1. A mobile communication terminal comprising:
a hard disk drive (HDD);
an impact detecting unit for outputting a HDD operation enable/disable signal indicative of a level of an exerted impact; and
a HDD operation control unit for deciding whether to operate the HDD according to the HDD operation enable/disable signal.

2. The mobile communication terminal as claimed in claim 1, wherein the impact detecting unit comprises:
an impact sensor for measuring and outputting an amount of the exerted impact on a mobile communication terminal;
a state signal generation module for outputting an impact detect signal which indicates that the impact is detected if the measured amount of impact is over a threshold value, and outputting a normal signal which indicates that the present state is a normal state, and that the exerted impact is not detected, if the measured amount of impact is below the threshold value; and
a HDD operation enable/disable signal generation module for outputting a HDD operation disable signal for stopping the operation of the HDD in an impact detect signal period and outputting a HDD operation enable signal for normal operation of the HDD in a normal signal period.

3. The mobile communication terminal as claimed in claim 2, wherein the normal signal comprises a square wave in which periods of a low-level state and a high-level state are in the ratio of 5:5.

4. The mobile communication terminal as claimed in claim 2, wherein the impact detect signal comprises a square wave in which periods of a low-level state and a high-level state are not in the ratio of 5:5.

5. The mobile communication terminal as claimed in claim 1, wherein the HDD operation control unit AND-gates a HDD access request clock signal and the HDD operation enable/disable signal, and operates the HDD so that the HDD access request is correctly processed in a HDD operation enable signal output period while it stops the operation of the HDD so that the access of the HDD is not performed in a HDD operation disable signal output period.

6. The mobile communication terminal as claimed in claim 1, wherein the impact detecting unit comprises at least one of a vibration sensor, an acceleration sensor and inclination sensor for detecting the level of the exerted impact.

7. A method of operating a hard disk drive (HDD) built in a mobile communication terminal, the method comprising the steps of:
detecting whether an impact over a predetermined level is exerted on a mobile communication terminal; and
if the step of detecting detects that the impact over the predetermined level is exerted on the terminal, stopping operation of the HDD.

8. The method as claimed in claim 7, wherein the stopping of the operation of the HDD comprises stopping of the operation of the HDD when HDD access attempt is requested, if the impact over the predetermined level is detected.
